# EUROPÄISCHE PATENTSCHRIFT

(11) **EP 1 944 255 B1**
(45) Veröffentlichungstag und Bekanntmachung des Hinweises auf die Patenterteilung: **28.03.2012**
(21) Anmeldenummer: 08100333.7
(22) Anmeldetag: 10.01.2008
(51) Int. Cl.: B65G 65/23, B65D 88/56

(54) **Entladevorrichtung und Anlage mit einer Entladevorrichtung**
Unloading device and installation with an unloading device
Dispositif de déchargement et installation dotée d'un dispositif de déchargement

(30) Priorität: 15.01.2007 AT 692007
(43) Veröffentlichungstag der Anmeldung: 16.07.2008
(73) Patentinhaber: Wanek-Pusset, Peter, 6805 Kapfenberg (AT); Grentner, Bernhard, 8614 Breitenau (AT)
(72) Erfinder: Wanek-Pusset, Peter, 6805 Kapfenberg (AT); Grentner, Bernhard, 8614 Breitenau (AT)
(74) Vertreter: Vinazzer, Edith

(56) Entgegenhaltungen:
- EP-A- 1 690 809
- DE-U1- 8 301 302
- FR-A- 2 540 838
- GB-A- 2 061 221
- JP-A- 2005 280 880
- US-A- 5 509 723
- US-A- 6 152 673

## Beschreibung

Die Erfindung betrifft eine stationäre Entladevorrichtung zur Kippentladung von mit Schüttgut befüllten, an ihrer Oberseite offenen Behältern, insbesondere von auf Containertragwaggons befindlichen Behältern, mittels eines höhenverstellbar gelagerten Gabelträgers mit einem Gabelarmpaar, welches in Gabeltunnel an der Unterseite des Behälters positionierbar ist, wobei der Gabelträger an einer Gabelträgereinheit angeordnet ist, welche an einem Kippteil angeordnet ist, welcher an einer Stütze um eine parallel zur Längsachse des zu entleerenden Behälters verlaufende Achse derart drehbar gelagert ist, dass der Behälter durch die Drehung des Kippteils über Kopf kippbar und entleerbar ist.

Eine derartige stationäre Entladevorrichtung ist aus der GB-A-2 061 221 bekannt. Der Kippteil weist zwei Träger auf, zwischen welchen eine Platte angeordnet sein kann, die in der Entleerposition des Behälters als Rampe für das zu entladende Schüttgut dient.

Aus der EP-A-1 690 809 ist eine Entladevorrichtung bekannt, welche als fahrbare oder stationäre Vorrichtung ausgeführt sein kann und, ähnlich einem Gabelstapler, zwei an einem Träger angeordnete Gabelarme aufweist. Der Träger ist entlang eines Hubgerüstes höhenverstellbar und gegenüber dem Gerüst drehbar angeordnet, sodass die Drehachse parallel zu den Gabelarmen ausgerichtet ist. Zur Entladung und anschließenden Entleerung eines mit Schüttgut befüllten Behälters werden die Gabelarme in die an der Unterseite des Behälters angeordneten Gabeltunnel eingeführt, der Behälter wird angehoben, das Fahrzeug zur Entladestelle gefahren und hier unter einer Betätigung der Dreheinrichtung der Behälter um eine quer zu seiner Längserstreckung verlaufende Achse gedreht, bis eine vollständige Entleerung stattgefunden hat. Der Behälter wird daher mit einer einzigen Vorrichtung gehandhabt, die die Entladung, die Entleerung und die Rückpositionierung des leeren Behälters übernimmt. Die Drehentleerung gewährleistet weiters eine vollständige Entleerung des Behälter. Die bekannte Entladevorrichtung benötigt aufgrund der Manipulationsvorgänge entsprechend viel Platz, da von der stillstehenden Wagengruppe die Behälter nacheinander entleert werden. Damit ist die Entladeleistung limitiert.

Der Erfindung liegt die Aufgabe zu Grunde, eine Entladevorrichtung zur Verfügung zu stellen, bei der die Waggons mit den zu entladenden Behältern mittels einer Verschubvorrichtung zugeführt werden, um auch auf beengtem Raum eine hohe Entladeleistung zu erzielen. Die Entladevorrichtung soll auch in einem Gebäude angeordnet werden können und somit eine staubfreie und lärmarme Entladung, beispielsweise in Ballungsgebieten, sicherstellen. Die Entladevorrichtung soll ferner so ausgeführt werden können, dass sie einfach montiert und abgebaut werden kann, um einen flexiblen Einsatz zu ermöglichen (Ausführung als mobile Stationäranlage). Bei einer stationär ausgeführten Vorrichtung soll ohne zeitaufwändige Transportwege gewährleistet sein, dass das Schüttgut, beispielsweise Holzhackgut oder sonstige Biomasse, direkt in ein Fördersystem, welches das Schüttgut weiter transportiert, entladen werden kann. Beim Entladen soll ferner kein Schüttgut verloren gehen.

Gelöst wird die gestellte Aufgabe erfindungsgemäß dadurch, dass am Kippteil oberhalb der Gabelträgereinheit eine schaufelartig ausgeführte Schütte befestigt ist, deren Breite die Behälterlänge übersteigt und deren Schüttvertiefung dem aufgenommenen Behälter zugewandt ist und an welche sich der zu entleerende Behälter während der Drehbewegung des Kippteils anlegt.

Mit einer erfindungsgemäß ausgeführten Vorrichtung wird der Behälter durch ein Drehen um eine parallel zu seiner Längsachse verlaufenden Achse über Kopf gekippt und entleert. Der Platzbedarf der Entleervorrichtung ist daher sehr gering. An der Rückseite der Vorrichtung kann für einen ungehinderten Weitertransport des entleerten Schüttgutes gesorgt werden. Die Entleerung mehrerer Behälter, insbesondere von einem Containertragwaggon, kann somit auf eine sehr rationelle Weise nacheinander erfolgen. Die Schütte stellt sicher, dass während der Kippbewegung des Behälters kein Ladegut unerwünscht ausgeleert bzw. ausgeschüttet wird.

Gemäß einer bevorzugten Weiterentwicklung der Erfindung ist die Stütze an einem stationären Grundteil parallel zur Erstreckung der Gabelarme translatorisch bewegbar. Die Stütze kann somit zur Aufnahme der gefüllten und zum Absetzen der geleerten Behälter relativ zur Transporteinrichtung, beispielsweise einem Containertragwaggon, auf einfache Weise verfahren werden.

Gemäß einem weiteren Merkmal der Erfindung ist der Gabelträger an einer Gabelträgereinheit angeordnet, welche gegenüber dem Kippteil seitlich verschiebbar ist. Diese Maßnahme gestattet eine Positionierung der Gabelträgereinheit gegenüber dem zu entleerenden Behälter in seitlicher Richtung.

Von besonderem Vorteil ist es, wenn der Gabelträger an der Gabelträgereinheit um eine parallel zu den Gabelarmen verlaufende Achse in die eine und in die andere Drehrichtung geringfügig drehbar ist. Die durch diese Maßnahme möglichen Drehbewegungen werden in der Praxis derart schnell durchgeführt, dass sie einem Rütteln gleichkommen, sodass nach dem Entleeren des Behälters gegebenenfalls an den Innenwänden haftendes Ladegut von den Wänden gelöst und der Behälter komplett entleert werden kann.

Der Kippteil lässt sich auf baulich einfache, zweckmäßige und funktionssichere Weise dadurch betätigen, dass er über Kniehebelanordnungen mit der Stütze gelenkig verbunden ist, wobei die Gelenkachse der Kniehebel vorzugsweise mittels Betätigungszylinder anhebbar und absenkbar sind.

Der maximale Kipp- bzw. Drehwinkel des Kippteils wird auf etwa 175° begrenzt. Dadurch wird eine optimale Entleerung der Behälter gewährleistet.

Wird bei der Erfindung vorgesehen, dass die Kipp- bzw. Drehbewegung automatisch steuerbar abläuft, wird das Bedienpersonal entlastet und eine besonders zeitsparende Entleerung der Behälter sichergestellt.

Die zur Positionierung der Gabelarme am Behälter durchzuführende Verschubbewegungen können durch eine manuelle oder alternativ auch durch eine automatische Steuerung durchgeführt werden. Die manuelle Steuerung hat den Vorteil, dass die Gabelarme zur Aufnahme der Behälter besonders exakt positioniert werden können, unabhängig davon, wie exakt die Waggons und Behälter positioniert sind.

Die Erfindung betrifft ferner eine Anlage zur Entladung und Entleerung von mit Schüttgütern befüllten Behältern, welche eine erfindungsgemäße Entladevorrichtung umfasst. Die Anlage verfügt vorzugsweise über eine Bedienkabine, die derart positioniert ist, dass die Verschubbewegungen der Waggons und die Bewegungen der Bestandteile der Entladevorrichtung gut einsehbar und damit überwachbar sind. Ein weiterer Bestandteil der Anlage ist vorzugsweise ein Container, in welchem die Antriebsaggregate und Komponenten der Steuerung der Entladevorrichtung untergebracht sind.

Weitere Merkmale, Vorteile und Einzelheiten der Erfindung werden nun anhand der Zeichnung, die ein Ausführungsbeispiel dargestellt, näher beschrieben. Dabei zeigen
Fig.1 eine Ansicht der erfindungsgemäßen Entladungsvorrichtung in Ruhestellung,
Fig. 2, 3 und 4 Ansichten der Vorrichtung, welche unterschiedliche Bewegungsmöglichkeiten einer Gabelträgereinheit der Entladevorrichtung verdeutlichen,
Fig. 5 eine Ansicht der Rückseite der Entladevorrichtung in Ruhestellung,
Fig. 6 bis 10 Ansichten der Entladevorrichtung in unterschiedlichen Stadien während des Betriebes und
Fig. 11 bis Fig. 15 Ansichten einer Entladeanlage in verschiedenen Stadien während des Betriebes.

Die nachfolgend verwendeten Bezeichnungen vertikal und horizontal, oben und unten beziehen sich auf die Ruhestellung der Vorrichtung und den Untergrund. Mit Frontseite ist eine dem Behälter vor dessen Aufnahme zugewandte Seite, mit Rückseite die entsprechend abgewandte Seite gemeint.

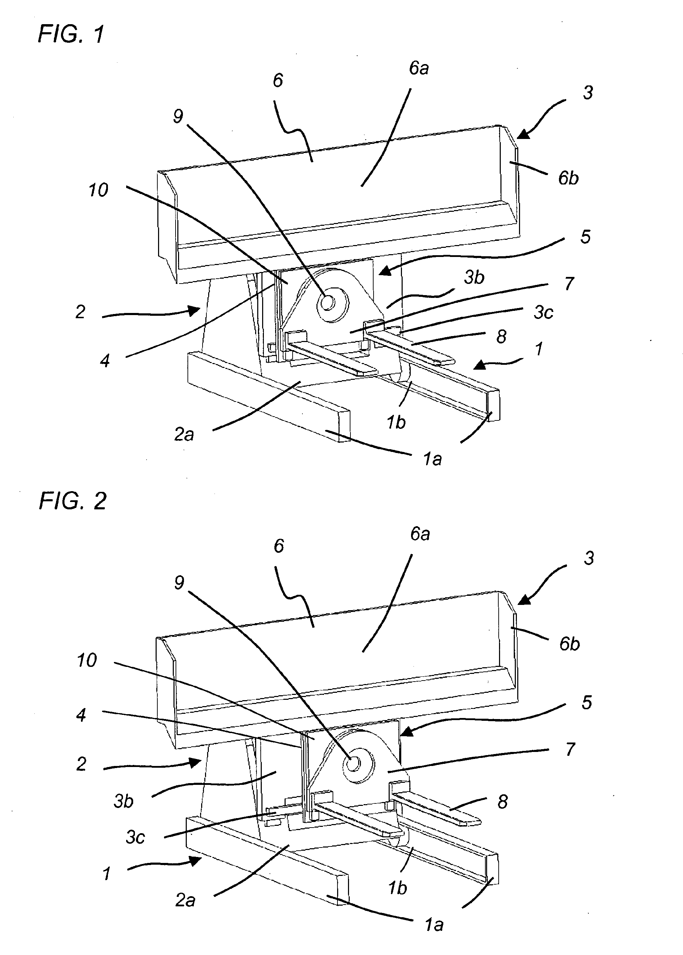

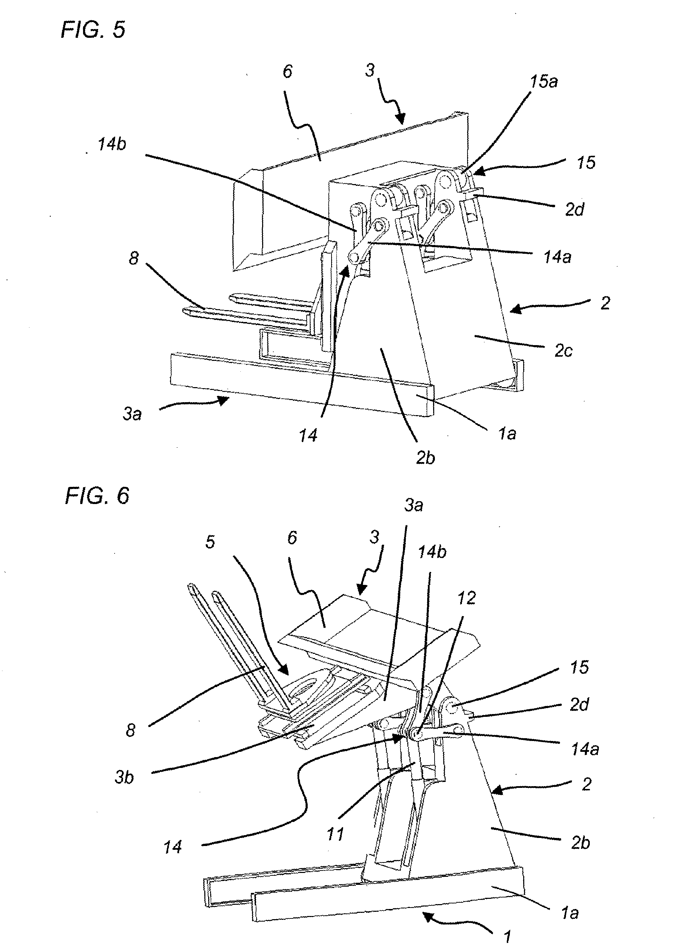

Fig. 1 bis 8 zeigen in einer vereinfachten, schematisierten Darstellung den Aufbau und die grundsätzliche Funktionsweise einer erfindungsgemäßen Entladevorrichtung. Zu den Hauptbestandteilen der Entladevorrichtung gehört ein am Untergrund feststehender Grundteil 1, welcher bei der dargestellten Ausführungsform zwei stabile, parallel zueinander angeordnete Längsträger 1a aufweist, welche an ihren einander zugewandten Längsseiten mit schienenartigen Führungen 1 b versehen sind. In den Führungen 1 b ist eine stabile Stütze 2 in Längsrichtung der Längsträger 1 verschiebbar angeordnet. Die Stütze 2 weist eine Basisplatte 2a, zwei senkrecht stehende, doppelwandig ausgeführte Seitenwangen 2b (siehe Fig. 5 bis Fig. 8), welche bei der dargestellten Ausführung in Draufsicht etwa dreieckförmig ausgeführt sind, und eine die Seitenwangen 2b an der Rückseite der Vorrichtung verbindende Rückwand 2c auf. Zwischen den Doppelwänden jeder Seitenwange 2b sind hydraulisch oder pneumatisch betätigbare Hebezylinder 11 angeordnet bzw. gelagert, welche jeweils an einer Gelenkachse 12 angreifen, die die beiden Hebel 14a, 14b einer Kniehebelanordnung 14 miteinander gelenkig verbindet. Der Hebel 14a jeder Kniehebelanordnung 14 ist am oberen Abschnitt der jeweiligen Seitenwange 2b, der Hebel 14b an je einem Seitenteil 3a eines Kippteils 3 gelenkig gelagert. Der Kippteil 3 ist um eine horizontal und quer zur Längserstreckung der Längsträger 1a verlaufende, am oberen Ende der Seitenwangen 2b angeordnete Achse 15 drehbar gelagert, welche von zwei Achsteilen 15a gebildet wird, die jeweils zwischen den zwei Wänden der Seitenwangen 2b verlaufen (siehe Fig. 5). Die Achse 15 befindet sich in der Ruhestellung der Vorrichtung oberhalb der Anlenkstellen der Hebel 14b und 14a, wobei die Anlenkstelle des Hebels 14b am Seitenteil 3a des Kippteils 3 gegenüber der Anlenkstelle des Hebels 14a an der jeweiligen Seitenwange 2b etwas höher liegt.

Der Kippteil 3 weist neben den bereits erwähnten Seitenteilen 3a eine die Seitenteile 3a verdeckende Frontplatte 3b auf. Am oberen Bereich des Kippteils 3 ist eine Schütte 6 fest angeordnet, welche eine ausgeprägte Quererstreckung aufweist, wobei ihre Breite die Länge des zu entladenen Behälters übersteigt. Die Schütte 6 ist etwa in der Form einer überdimensionalen Schaufel mit einer Rückwand 6a und drei Seitenbegrenzungen 6b ausgeführt. In der Ruhestellung (Fig. 1) steht die Rückwand 6a der Schütte 6 senkrecht, die vertikalen Seiten und die untere, waagrechte Längsseite sind die mit den Begrenzungen 6b versehenen Seiten.

An der Frontplatte 3b des Kippteils 3 ist eine Gabelträgereinheit 5 angeordnet, welche einen plattenförmiger Träger 10 aufweist, der an horizontal und parallel zueinander verlaufenden Querführungen 3c der Frontplatte 3b verschiebbar angeordnet ist. Die Gabelträgereinheit 5 weist einen weiteren plattenförmigen Träger 10 auf, welcher an der Frontseite des Trägers 4 in senkrecht und parallel zueinander verlaufenden Vertikalführungen 4a verschiebbar gelagert ist. Am Träger 10 ist ein Gabelträger 7 mit zwei parallel den Längsträgern 1a verlaufenden Gabelarmen 8 angeordnet. Der Gabelträger 7 ist mit dem Träger 10 über ein Lager 9 verbunden. Das Lager 9 gestattet es, den Gabelträger 7 bei Bedarf wechselseitig in die eine und andere Richtung um einen kleinen Winkel um eine parallel zu den Gabelarmen 8 verlaufende Achse zu kippen.

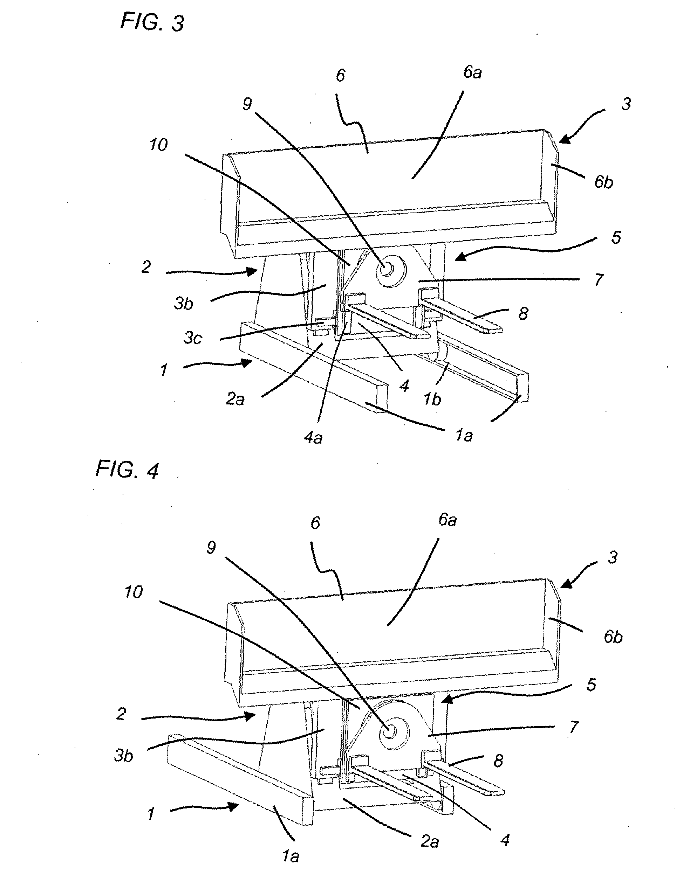

Fig. 1 und 5 zeigen die Entladevorrichtung in der Grund- bzw. Ruhestellung. Mittels nicht gezeigter Antriebseinrichtungen können unterschiedliche Bewegungsabläufe durchgeführt werden, die nun anhand der Fig. 2 bis 4 und 6 bis 8 näher erläutert werden. Wie Fig. 2 zeigt ist ein seitlicher Verschub der Gabelträgereinheit 5 an den Querführungen 3c am Kippteil 3 möglich, wobei von der mittigen Grundstellung aus der seitliche Verschub in beide Richtungen etwa 400 mm betragen sollte. Auf diese Weise lässt sich die Gabelträgereinheit 5 gegenüber dem zu entleerenden Behälter seitlich positionieren. Fig. 3 zeigt die Gabelträgereinheit 5 nach einem Höhenverschub in senkrechter Richtung, wobei, ausgehend von der mittigen Grundstellung, der Höhenverschub der Gabelträgereinheit 5 in beide Richtungen jeweils etwa 300 mm betragen sollte. Der Höhenverschub gestattet eine Anpassung der Gabelträgereinheit 5 an unterschiedliche Behälteraufstandshöhen auf Waggons. Zum Heranfahren der Gabelträgereinheit 5 an die Seite des zu entladenden Waggons kann die Stütze 2 mitsamt den auf ihr angeordneten Bestandteilen der Vorrichtung an den Längsträgern 1a verfahren werden, wie es in Fig. 4 gezeigt ist. Der diesbezüglich vorgesehene Längsverschub sollte etwa 3.500 mm betragen.

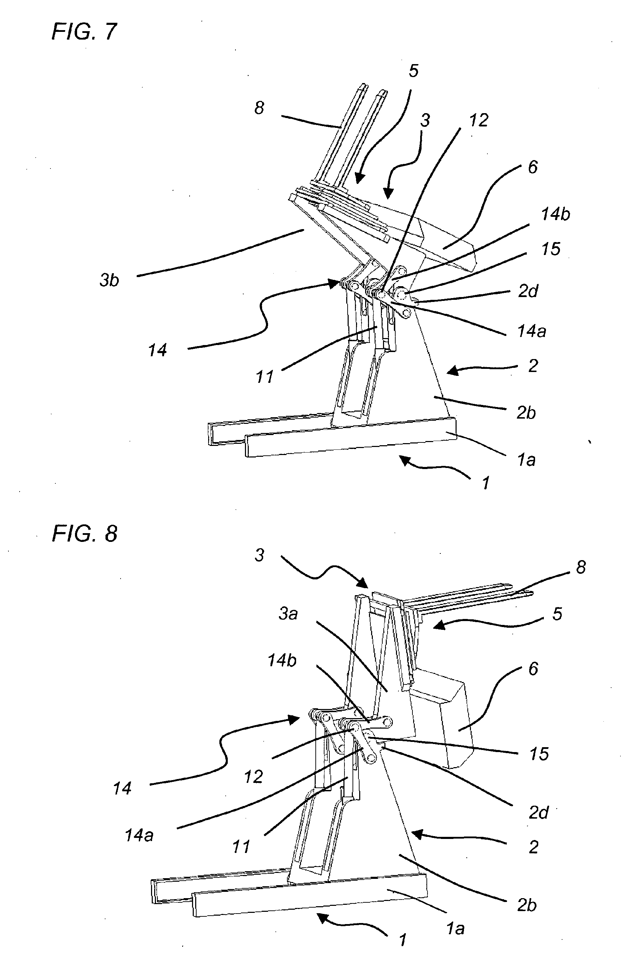

Fig. 6 bis 8 zeigen unterschiedliche Stadien der Bewegung des Kippteils 3 mit der Gabelträgereinheit 5 gegenüber der Stütze 2. Durch ein Ausfahren der beiden Zylinder 11 wird der Kippteil 3 um die Achse 15 gedreht, Fig. 6 zeigt die Position des Kippteils 3 nach einer Drehung von 60° gegenüber seiner Grundstellung. In Fig. 7 ist der Kippteil 3 um etwa 120° gegenüber der Ausgangslage gedreht. Fig. 8 zeigt die Endstellung bei etwa 175° Drehwinkel, in welcher eine weitere Dreh- bzw. Kippbewegung durch Endanschläge 2d verhindert ist.

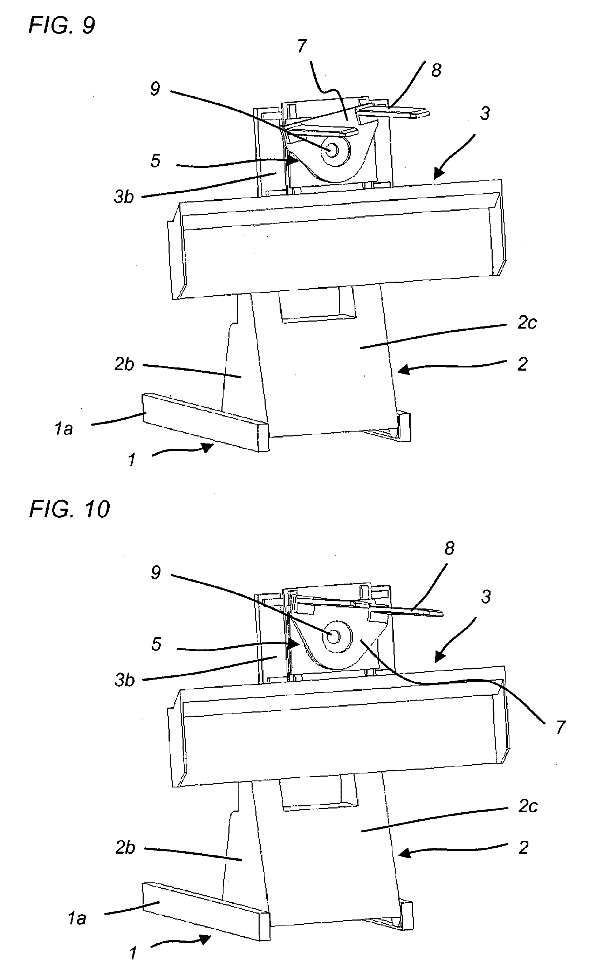

Fig. 9 und Fig. 10 zeigen die Gabelträgereinheit 5 während des Durchführens eines Rüttelzyklus. Der Gabelträger 7 wird um die durch das Lager 9 gebildete Achse abwechselnd um etwa bis zu 10° nach rechts und nach links gedreht. Diese Drehbewegungen erfolgen derart schnell, dass sie einem Rütteln gleichkommen. Der Rüttelzyklus kann beispielsweise durch einen nicht gezeigten hydraulisch oder pneumatisch betätigbaren Zylinder durchgeführt werden.

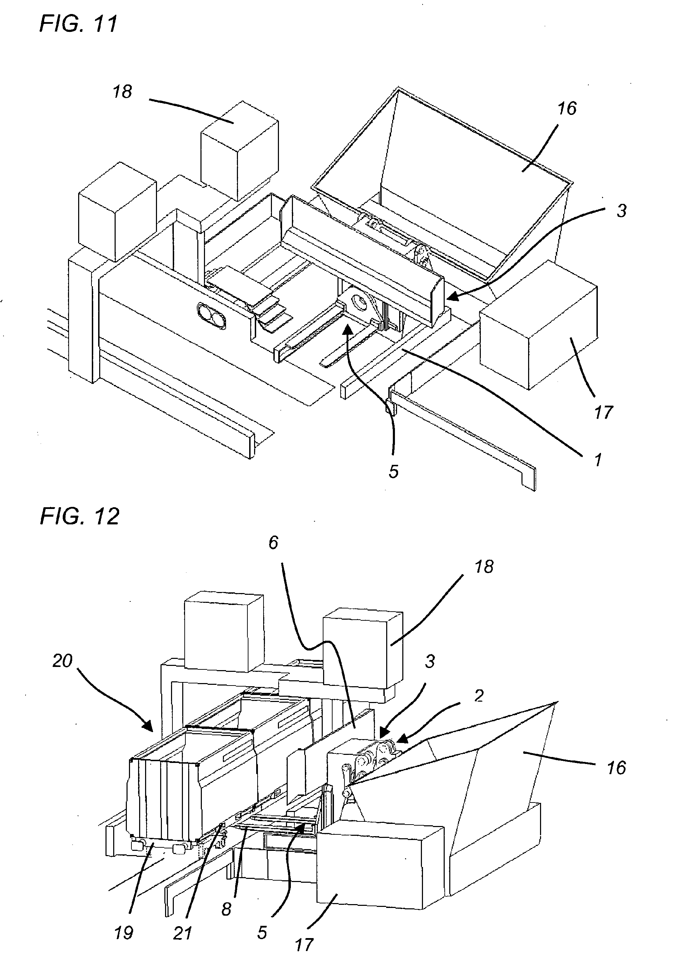

Fig. 11 bis Fig. 15 zeigen Ansichten einer Entladeanlage mit einer erfindungsgemäßen Entladevorrichtung. Als Hauptkomponenten umfasst diese Anlage neben der Entladevorrichtung einen Bunker 16 zur Aufnahme des Entladegutes mit Zuführung zu einer nicht gezeigten Einrichtung für den Weitertransport des Entladegutes, einen Versorgungscontainer 17 für die Versorgungseinrichtungen, wie Antriebsaggregate, die elektrische Steuerung und eine Bedienkabine 18, die derart positioniert ist, dass die Verschubbewegungen der Waggons und das Einfahren der Gabelarme in den zu entleerenden Behälter gut eingesehen werden können.

Der Verschub des Waggons erfolgt vorzugsweise durch manuelle Bedienung von der Kabine 18 aus. Eine beispielsweise mit Laser arbeitende Einrichtung kann als Positionierhilfe für den mit insbesondere drei Behältern beladenen Waggon vorgesehen sein. Der mit Behältern 20 beladene Waggon 19 wird daher vorerst in Parkposition gefahren (Fig. 12), wobei der zu entladende Behälter 20 gegenüber der Entladevorrichtung, die stationär angeordnet ist, entsprechend positioniert wird. Zur Entleerung mit einer erfindungsgemäßen Entladevorrichtung eignen sich solche Behälter 20, welche an ihrer Oberseite offen sind oder geöffnet werden können und welche an ihrer Unterseite mittig mit zwei quer zur Behälterlängserstreckung verlaufenden Gabeltunneln 21 für die Gabelzinken 8 des Gabelträgers 7 versehen sind.

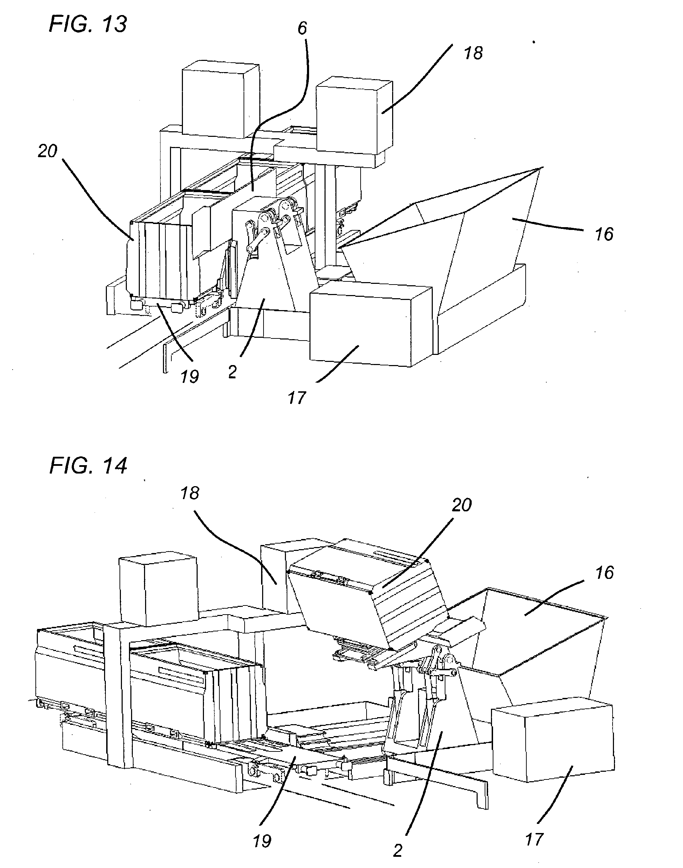

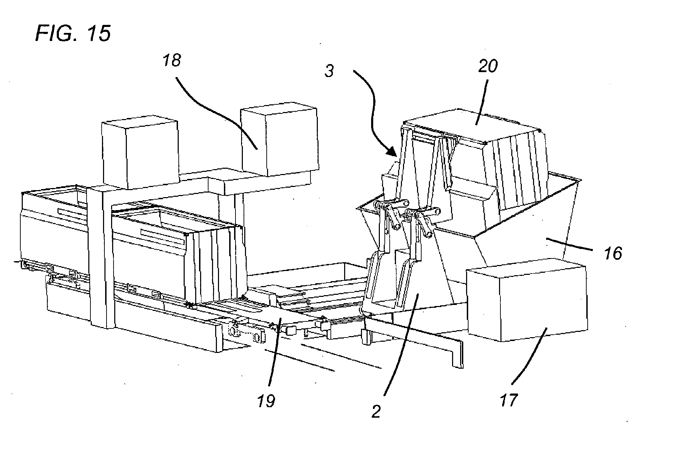

Nun wird die Entladevorrichtung in Betriebsbereitschaft versetzt. Zuerst werden die Gabelarme 8 in den Gabeltunneln 21, beispielsweise durch eine Joystick-Betätigung seitens der Bedienperson und damit manuell, positioniert. Wie beschrieben werden dabei die Gabelarme 8 entsprechend seitlich verschoben und ihre Position wird in Höhenrichtung angepasst (Fig. 12). Nun werden die Gabelarme 8 in die Gabeltunnel 21 eingefahren, indem die Stütze 2 an den stationären Längsträgern 1a längsverschoben wird (Fig. 13). Die Schütte 6 liegt mit ihrer unteren Begrenzung 6b am Behälter 20 an. Sind die Gabelarme 8 vollständig eingefahren, wird dies über einen Taster an der Stütze 2 der Bedienperson angezeigt. Nun ist vorzugsweise der manuelle Betrieb der Entladevorrichtung abgeschlossen. Der Kippvorgang wird ohne weitere Betätigung seitens der Bedienperson durchgeführt. Der Behälter 20 wird vorerst um etwa 100 mm angehoben und die Stütze 2 mitsamt dem angehobenem Behälter 20 in die Ausgangsstellung zurückgefahren, wobei auch die Gabelträgereinheit 5, bezogen auf die durchgeführte Höhen- und Seitenpositionierung, vorzugsweise automatisch in die Ausgangsstellung zurückgebracht wird. Sind diese Bewegungsvorgänge abgeschlossen wird der Kippvorgang ebenfalls vorzugsweise automatisch eingeleitet. Der Behälter 20 wird bis zu einem Winkel von etwa 175° gekippt, wobei sowohl der Anfahr- als auch der Bremsvorgang mit reduzierten Geschwindigkeiten durchgeführt werden. Ab einem Winkel von etwa 70° legt sich der Behälter 20 durch die Schwerkraft an der Schütte 6 an, die derart ausgebildet ist, dass kein Ladegut neben den Bunker 16 fällt. Während des Kippvorganges stützt sich die Seitenwand des Behälters 20 am Kippteil 3 ab, welcher an diesen Stellen mit einer Gummiauskleidung versehen ist. Dabei befindet sich die obere Endkante der Schütte 6 schon über dem Bunker 16. Fig. 15 zeigt die komplett aufgekippte Stellung bei 175°. Die an den oberen Enden der Seitenwangen 2b der Stütze 2 vorgesehenen Anschläge 2d begrenzen die Kippbewegung auf die erwünschte Kippstellung bei 175°.

Bei sehr tiefen Temperaturen oder großen Temperaturunterschieden zwischen Tag und Nacht kann Ladegut an den Innenwänden des Behälters 20 festfrieren. Stellt die Bedienperson fest, dass sich nach dem Entleeren noch Reste von Ladegut im Behälter befinden, wird ein Rüttelzyklus eingeleitet. Durch Betätigen einer entsprechenden Taste in der Bedienzentrale wird der Behälter 20 um die durch das Lager 9 gebildete Drehachse hin und her bewegt. Durch das Spiel zwischen den Gabelarmen 8 und den Gabeltunneln 2 werden leichte Schläge auf die Behälterwände übertragen, diese vibrieren, sodass sich das an den Wänden des Behälters noch befindliches Ladegut löst. Beim Beenden des Rüttelvorganges wird die Gabelträgereinheit 5 wieder in ihrer Ausgangsstellung positioniert.

Nach dem Entladevorgang wird der Behälter 20 unter Überwachung, beispielsweise mittels eines Wegmesssystems, zurückgekippt. Nach Erreichen der Ausgangsstellung wird die Gabelträgereinheit 5 bezüglich Höhenversatz und Seitenverschub wieder in jene Lage gebracht, in welcher vorher die Aufnahme des vollen Behälters 20 erfolgte. In dieser Stellung ist der Automatikbetrieb abgeschlossen.

Nachdem nicht ausgeschlossen werden kann, dass während der Entladung des Behälters 20 Relativbewegungen zwischen Waggon und Behälter 20 aufgetreten sind, ist es von Vorteil, wenn der leere Behälter 20 manuell am Waggon abgesetzt wird. Die exakte Positionierung des Behälters 20 lässt sich mittels eines Überwachungssystems (Kameras) verfolgen. Die Stütze 2 und die Gabelträgereinheit 5 werden, soweit erforderlich, verfahren. Sobald der Behälter 20 am Waggon abgestellt ist, wird die Stütze 2 in die Parkstellung, die Gabelträgereinheit 5 wird in ihre Ausgangsstellung gebracht.

Es ist vorgesehen, sämtliche Bewegungen der Entladevorrichtung entsprechend zu steuern und zu überwachen. Die vorgesehenen Betätigungszylinder und Antriebe können integrierte Wegmesssysteme aufweisen und über Proportionalventile lastunabhängig arbeiten. Die Überwachungs- und Steuerungseinrichtungen können auch so ausgebildet sein, dass diese einen vollautomatischen (mannlosen) Betrieb ermöglichen.

Die erfindungsgemäße Entladevorrichtung ist kompakt aufgebaut und hat einen geringen Platzbedarf. Sie lässt sich soweit demontieren, dass sie an einen anderen Einsatzort transportiert werden kann. Als Einsatzort für die Entladevorrichtung kommen auch Gebäude in Frage.

## Patentansprüche

1. Stationäre Entladevorrichtung zur Kippentladung von mit Schüttgut befüllten, an ihrer Oberseite offenen Behältern, insbesondere von auf Containertragwaggons befindlichen Behältern, mittels eines höhenverstellbar gelagerten Gabelträgers (7) mit einem Gabelarmpaar (8), welches in Gabeltunnel an der Unterseite des Behälters positionierbar ist, wobei der Gabelträger (7) an einer Gabelträgereinheit (5) angeordnet ist, welche an einem Kippteil (3) angeordnet ist, welcher an einer Stütze (2) um eine parallel zur Längsachse des zu entleerenden Behälters (20) verlaufende Achse (15) derart drehbar gelagert ist, dass der Behälter (20) durch die Drehung des Kippteils (3) über Kopf kippbar und entleerbar ist, **dadurch gekennzeichnet,**
**dass** am Kippteil (3) oberhalb der Gabelträgereinheit (5) eine schaufelartig ausgeführte Schütte (6) befestigt ist, deren Breite die Behälterlänge übersteigt und deren Schüttvertiefung dem aufgenommenen Behälter (20) zugewandt ist und an welche sich der zu entleerende Behälter (20) während der Drehbewegung des Kippteils (3) anlegt.

2. Entladevorrichtung nach Anspruch 1, **dadurch gekennzeichnet, dass** die Stütze (2) an einem stationären Grundteil (2) parallel zur Erstreckung der Gabelarme (8) translatorisch bewegbar ist.

3. Entladevorrichtung nach Anspruch 1, **dadurch gekennzeichnet, dass** die Gabelträgereinheit (5) gegenüber dem Kippteil (3) seitlich verschiebbar ist.

4. Entladevorrichtung nach einem der Ansprüche 1 bis 3, **dadurch gekennzeichnet, dass** der Gabelträger (7) an der Gabelträgereinheit (5) um eine parallel zu den Gabelarmen (8) verlaufende Achse (11) abwechselnd in die eine und andere Drehrichtung geringfügig drehbar ist.

5. Entladevorrichtung nach einem der Ansprüche 1 bis 4, **dadurch gekennzeichnet, dass** der Kippteil (3) über Kniehebelanordnungen (14) mit der Stütze (2) gelenkig verbunden ist.

6. Entladevorrichtung nach Anspruch 5, **dadurch gekennzeichnet, dass** die Gelenkachsen (12) der Kniehebel (14a, 14b) mittels Betätigungszylinder (11) anhebbar und absenkbar sind.

7. Entladevorrichtung nach einem der Ansprüche 1 bis 6, **dadurch gekennzeichnet, dass** der maximale Kipp- bzw. Drehwinkel des Kippteils (3) etwa 175° beträgt.

8. Entladevorrichtung nach einem der Ansprüche 1 bis 7, **dadurch gekennzeichnet, dass** die Kipp- bzw. Drehbewegung automatisch steuerbar ist.

9. Entladevorrichtung nach einem der Ansprüche 1 bis 7, **dadurch gekennzeichnet, dass** die zur Positionierung der Gabelarme (8) am Behälter (20) durchzuführenden Verschubwege durch eine manuelle oder eine automatische Steuerung durchführbar sind.

10. Anlage zur Entladung und Entleerung von mit Schüttgütern befüllten Behältern, welche eine Entladevorrichtung aufweist, die gemäß einem oder mehreren der Ansprüche 1 bis 9 ausgeführt ist.

11. Anlage nach Anspruch 10, **dadurch gekennzeichnet, dass** sie eine Bedienkabine (18) aufweist, die derart positioniert ist, dass die Verschubbewegungen der Waggons und die Bewegungen der Bestandteile der Entladevorrichtung überwachbar sind.

12. Anlage nach Anspruch 10 oder 11, **dadurch gekennzeichnet, dass** sie zumindest einen Container (17) zur Unterbringung der Antriebsaggregate und der Komponenten der Steuerung der Entladevorrichtung aufweist.

## Claims

1. Stationary unloading device for the tipping unloading of containers which are open at the top and filled with bulk materials, more particularly containers located on container carriers, by means of a height-adjustable fork carrier (7) with a pair of fork arm (8) which can be positioned in a fork tunnel on the underside of the container, whereby the fork carrier (7) is arranged on a fork carrier unit (5) which is arranged on a tipping section (3), which on support (2) is rotatably borne around an axle (15) running parallel to the longitudinal axis of the container to be emptied (20) in such a way that the container (20) through the rotation of the tipping section (3) can be tipped upside down and emptied,
**characterised in that**
attached to the tipping section (3) above the fork carrier unit (5) is a shovel-like chute (6) the width of which exceeds the container length and the chute hollow of which faces the held container (20) and is adjoined by the container (20) to be emptied during the rotatory movement of the tipping section (3).

2. Unloading device in accordance with claim 1, **characterised in that** the support (2) can be moved in a translational manner on a stationary base section (2) parallel to the extent of the fork arms (8).

3. Unloading device in accordance with claim 1, **characterised in that** the fork carrier unit (5) can be laterally displaced with regard to the tipping section (3).

4. Unloading device in accordance with any one of claims 1 to 3, **characterised in that** the fork carrier (7) on the fork carrier unit (5) can be slightly turned alternately in one and the other direction of rotation about an axle (11) running parallel to the fork arms (8).

5. Unloading device in accordance with any one of claims 1 to 4, **characterised in that** the tipping section (3) is connected in an articulated manner via toggle-lever assemblies (14) to the support (2).

6. Unloading device in accordance with claim 5, **characterised in that** the joint axles (12) of the toggle levers (14a, 14b) are can be raised and lowered by means of operating cylinders (11).

7. Unloading device in accordance with any one of claims 1 to 6, **characterised in that** the maximum tipping/turning angle of the tipping section (3) is around 7.75°.

8. Unloading device in accordance with any one of claims 1 to 7, **characterised in that** the tipping/turning movement can be automatically controlled.

9. Unloading device in accordance with any one of claims 1 to 7, **characterised in that** the displacement movements for positioning the fork arms (8) on the container (20) can be carried out by way of manual or automatic control.

10. Installation for unloading and emptying containers filled with bulk materials comprising an unloading device designed in accordance with one or more of claims 1 to 9.

11. Installation in accordance with claim 10, **characterised in that** it has an operating cabin (18) which is positioned in such a way that the displacement movement of the carriers and the movements of the components of the unloading device can be monitored.

12. Installation in accordance with claim 10 or 11, **characterised in that** it has at least one container (17) for accommodating the drive mechanisms and the control components of the unloading device.

## Revendications

1. Dispositif de déchargement fixe pour le déchargement par bascule de conteneurs remplis de matière en vrac et ouverts sur leur face supérieure, en particulier de conteneurs se trouvant sur des wagons portant des containers, au moyen d'un porte-fourche (7) disposé en étant réglable en hauteur avec une paire de bras de fourche (8) qui peut être positionnée dans le tunnel de fourche sur la face inférieure du conteneur, sachant que le porte-fourche (7) est disposé sur une unité de porte-fourche (5) qui est disposée sur une partie basculante (3), laquelle est disposée de manière rotative sur un appui (2) sur un axe (15) parallèle à l'axe longitudinal du conteneur (20) à vider, de telle manière que le conteneur (20) peut être basculé par-dessus tête par la rotation de la partie basculante (3) et peut être vidé,
**caractérisé en ce qu'**
une glissière (6) conçue comme une pelle est fixée sur la partie basculante (3), au-dessus de l'unité de porte-fourche (5), dont la largeur dépasse la longueur du conteneur et dont le creux de versement est tourné vers le conteneur (20) reçu et sur lequel le conteneur (20) à vider repose pendant la rotation de la partie basculante (3).

2. Dispositif de déchargement selon la revendication 1, **caractérisé en ce que** l'appui (2) est mobile de marnière translationnelle sur une partie de base fixe (2), parallèlement à l'extension des bras de fourche (8).

3. Dispositif de déchargement selon la revendication 1, **caractérisé en ce que** l'unité de porte-fourche (5) peut être déplacée latéralement par rapport à partie basculante (3).

4. Dispositif de déchargement selon l'une des revendications 1 à 3, **caractérisé en ce que** le porte-fourche (7) sur l'unité de porte-fourche (5) est légèrement rotatif en alternant dans un sens de rotation puis dans l'autre sur un axe (11) parallèle aux bras de fourche (8).

5. Dispositif de déchargement selon l'une des revendications 1 à 4, **caractérisé en ce que** la partie basculante (3) est reliée de manière articulée à l'appui (2) par des agencements de leviers à genouillère (14).

6. Dispositif de déchargement selon la revendication 5, **caractérisé en ce que** les axes articulés (12) des leviers à genouillère (14a, 14b) peuvent être levés et abaissés au moyen de vérins d'actionnement (11).

7. Dispositif de déchargement selon l'une des revendications 1 à 6, **caractérisé en ce que** l'angle de bascule, respectivement, de rotation maximal de la partie basculante (3) est d'environ 175°.

8. Dispositif de déchargement selon l'une des revendications 1 à 7, **caractérisé en ce que** le mouvement de bascule, respectivement, de rotation, peut être commandé automatiquement.

9. Dispositif de déchargement selon l'une des revendications 1 à 7, **caractérisé en ce que** les trajets de déplacement à exécuter pour positionner les bras de fourche (8) sur le conteneur (20) peuvent être exécutés par une commande manuelle ou automatique.

10. Installation pour décharger et vider des conteneurs chargés de matières en vrac, laquelle présente un dispositif de déchargement qui est réalisé selon une ou plusieurs des revendications 1 à 9.

11. Installation selon la revendication 10, **caractérisé en ce qu'**elle présente une cabine de service (18) qui est ainsi positionnée que les mouvement de déplacement des wagons et les mouvement des composantes du dispositif de déchargement peuvent être surveillés.

12. Installation selon la revendications 10 ou 11, **caractérisé en ce qu'**elle présente au moins un container (17) pour abriter les groupes d'entrainement et les composants de la commande du dispositif de déchargement.
